# EUROPÄISCHE PATENTSCHRIFT

(11) **EP 3 548 302 B1**
(45) Veröffentlichungstag und Bekanntmachung des Hinweises auf die Patenterteilung: **20.04.2022**
(21) Anmeldenummer: 17822154.5
(22) Anmeldetag: 29.11.2017
(51) Int. Cl.: B60B 33/00

(54) **ROLLE MIT BREMSVORRICHTUNG**
CASTER WITH BRAKING DEVICE
ROULEAU MUNI D'UN DISPOSITIF DE FREINAGE

(30) Priorität: 30.11.2016 DE 102016123080
(43) Veröffentlichungstag der Anmeldung: 09.10.2019
(73) Patentinhaber: GROSS + FROELICH GMBH & CO. KG, 71263 Weil der Stadt (DE)
(72) Erfinder: ROTTENAU, Hans-Wilhelm, 72379 Hechingen (DE); VON BORDELIUS, Ralph, 74074 Heilbronn (DE)
(74) Vertreter: Pfiz, Thomas
(86) Internationale Anmeldenummer: PCT/EP2017/080789
(87) Internationale Veröffentlichungsnummer: WO 2018/099953

(56) Entgegenhaltungen:
- EP-A1- 0 458 446
- WO-A1-81/02273
- WO-A2-2011/111946
- DE-A1- 2 737 650
- DE-A1-102015 103 869
- DE-U1- 9 103 097
- US-A- 5 355 550

## Beschreibung

Die Erfindung betrifft eine Rolle, mit einem Gehäuse und einem in einer im Wesentlichen horizontal ausgerichteten Gehäuseöffnung angeordneten Achsbolzen, an dem mindestens ein Rad angeordnet ist, mit einer im Wesentlichen vertikal ausgerichteten, oberseitigen Zapfenöffnung zur Aufnahme eines Drehzapfens, und mit einer Bremsvorrichtung, die das mindestens eine Rad in einem ersten Belastungszustand bremst und in einem zweiten Belastungszustand freigibt, wobei die Gehäuseöffnung für den Achsbolzen eine begrenzte, vertikale Verschiebbarkeit des Achsbolzens erlaubt und die Bremsvorrichtung mindestens eine federelastische Gehäusepartie umfasst, die auf den Achsbolzen einwirkt.

Bei Rollen dieser Art, die sowohl als Einzelrollen mit einem Rad als auch als Doppelrollen mit zwei Rädern ausgebildet sein können, soll in einem Belastungszustand, beispielsweise dem unbelasteten Zustand, eine Bremswirkung auf das oder die Räder ausgeübt werden, um ein unbeabsichtigtes Wegrollen eines mit diesen Rollen bestückten Möbelstücks, typischerweise eines Bürostuhls, im Sinne der Unfallverhütung zu verhindern. Um dies zu erreichen sind in der Vergangenheit verschiedenste Bremseinrichtungen für Rollen vorgeschlagen worden, die teilweise jedoch mechanisch recht aufwendig und damit kostenträchtig sind. Eine Rolle der eingangs genannten Art ist aus der DE 10 2015 103 869 A1 bekannt. Bei dieser Rolle ist wenigstens eine Feder vorgesehen, die auf den Achsbolzen einwirkt und diesen in Richtung mindestens einer Bremsfläche spannt, wobei die Feder einstückig mit dem Kunststoffgehäuse der Rolle ausgebildet ist. Diese einfache Lösung ist sehr kostengünstig, weist jedoch den Nachteil einer vergleichsweise geringen mechanischen Belastbarkeit auf, insbesondere bei den von Herstellern durchgeführten Falltests, bei denen ein Schlag auf den Achsbolzen und somit die Feder erfolgt.

Eine lastabhängig gebremste Rolle allgemeiner Art ist aus der DE 91 03 097 U bekannt. Bei dieser Rolle, wie bei einer Vielzahl vergleichbarer Rollen, ist eine in dem Gehäuse vertikal angeordnete Schraubenfeder vorgesehen, die direkt von oben auf den Achsbolzen einwirkt und diesen im unbelasteten Zustand der Rolle in eine Bremsstellung bewegt. Bei einer aus der DE 27 37 650 A1 bekannten Rolle ist die federelastische Gehäusepartie lediglich einseitig über eine Stegpartie mit dem Gehäuse verbunden, wodurch eine nur geringe mechanische Belastbarkeit gegeben ist.

Ausgehend hiervon liegt der vorliegenden Erfindung die Aufgabe zugrunde, eine gattungsgemäße Rolle bereitzustellen, die eine kostengünstig realisierbare aber dennoch mechanisch zuverlässige Bremsvorrichtung aufweist.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung beruht vor allem auf einer mechanischen Verstärkung einer einstückig mit dem Rollengehäuse ausgebildeten Feder einer Bremsvorrichtung, alternativ auf der Anordnung der den Achsbolzen aufnehmenden Gehäuseöffnung in einer begrenzt elastisch verschiebbaren, einstückig mit dem Rollengehäuse ausgebildeten Gehäusepartie.

Gemäß der Erfindung weist die Bremsvorrichtung weiterhin mindestens ein Federelement auf, das mit der mindestens einen federelastischen Gehäusepartie zusammenwirkt und deren Bremskraftwirkung verstärkt und/oder die mechanische Belastbarkeit der mindestens einen federelastischen Gehäusepartie erhöht. Das Gehäuse oder zumindest die mindestens eine federelastische Gehäusepartie besteht bevorzugt aus einem Kunststoff, beispielsweise aus Polypropylen oder Polyamid.

Zweckmäßig besteht das mindestens eine Federelement aus Metall, aus einem faserverstärkten Kunststoff oder einem anderen Werkstoff mit einer höheren mechanischen Belastbarkeit als die der mindestens einen federelastischen Gehäusepartie.

Das mindestens eine Federelement kann gemäß einer ersten bevorzugten Ausführungsform als Blattfeder ausgebildet sein, die in das Material der mindestens einen federelastischen Gehäusepartie eingebettet ist. Dies erfolgt zweckmäßig dadurch, dass das Federelement als Einlegeteil in einer Spritzgussform für das Rollengehäuse angeordnet und dann umspritzt wird. Dies hat den Vorteil, dass das Federelement keinen direkten Kontakt zu dem Achsbolzen hat, so dass keine Geräusche erzeugt werden oder ein Verschleiß auftritt. Das mindestens eine Federelement kann die mindestens eine federelastische Gehäusepartie jedoch auch in Richtung des mindestens einen Rades überragen, wobei dann die Endbereiche des Federelements beschichtet oder anders ausgestattet sein können, um Geräusche und Verschleiß zu verhindern.

Die Bremswirkung wird nicht unmittelbar durch die auf den Achsbolzen wirkende federelastische Gehäusepartie, unterstützt durch das Federelement, erzielt, sondern dadurch, dass der Achsbolzen in der als Langloch ausgebildeten Gehäuseöffnung vertikal verschoben wird, wodurch ein Gehäuseelement bremsend auf das mindestens eine Rad einwirkt. In vorteilhafter Ausgestaltung der Erfindung weist das Gehäuse zu diesem Zweck mindestens eine seitlich über die Gehäuseöffnung für den Achsbolzen überstehende Wandpartie auf, an der eine Nabe des mindestens einen Rads in dem ersten, bremsenden Belastungszustand der Rolle reib- und/oder formschlüssig anliegt.

Die mindestens eine federelastische Gehäusepartie ist zweckmäßig durch mindestens zwei randoffene, die mindestens eine federelastische Gehäusepartie zwischen sich aufnehmende Schlitze in einem Wulstrand der den Achsbolzen aufnehmenden Gehäuseöffnung geschaffen. Die federelastische Gehäusepartie bildet damit mindestens einen Sektor des Wulstrands. Während die Erfindung auch bei Einradrollen realisierbar ist, ist das Hauptanwendungsgebiet Doppelrollen für Möbel, insbesondere für Bürostühle. In bevorzugter Ausgestaltung der Erfindung ist die Rolle daher als Doppelrolle mit zwei jeweils an einem Ende des Achsbolzens angeordneten Rädern ausgebildet, wobei die Bremsvorrichtung zu jedem Rad hin weisende federelastische Gehäusepartien aufweist.

In einer alternativen Ausgestaltung der Erfindung ist das mindestens eine Federelement an einer Gehäuseseitenfläche auf die dem Achsbolzen abgewandte Seite der mindestens einen federelastischen Gehäusepartie einwirkend angeordnet, derart dass die mindestens eine federelastische Gehäusepartie zwischen dem mindestens einen Federelement und dem Achsbolzen eingeklemmt ist. Hierzu sind zweckmäßig an der Gehäuseseitenfläche Vorsprünge angeordnet, die Endbereiche des mindestens einen Federelements an der Gehäuseseitenfläche festlegen.

Im Folgenden wird die Erfindung anhand eines in der Zeichnung in schematischer Weise dargestellten Ausführungsbeispiels näher erläutert. Es zeigen
- Fig. 1a: bis c ein erstes Ausführungsbeispiel der Erfindung in teilweise weggebrochener und in geschnittener Ansicht im unbelasteten, gebremsten Zustand;
- Fig. 2a: und b die Rolle in Ansichten entsprechend Fig. 1a und c im belas-teten, freilaufenden Zustand;
- Fig. 3a: bis c ein zweites Ausführungsbeispiel der Erfindung in teilweise weggebrochener und in geschnittener Ansicht im unbelasteten, gebremsten Zustand;
- Fig. 4a: und b die Rolle in Ansichten entsprechend Fig. 3a und c im belas-teten, freilaufenden Zustand;
- Fig. 5a: bis e verschiedene Ansichten einer alternativen, nicht erfindungsgemäßen Konfiguration der Erfindung im unbelasteten, gebremsten Zustand;
- Fig. 6a: bis e verschiedene Ansichten der Rolle jeweils entsprechend Fig.5a bis e im belasteten, freilaufenden Zustand;
- Fig. 7a: bis c eine unbelastete, gebremste Rolle mit Einzelrad und einer Bremsvorrichtung entsprechend der in Fig. 1 und 2 dargestellten Bremseinrichtung;
- Fig. 8a: bis c die Rolle gemäß Fig. 7 im belasteten, freilaufenden Zustand;
- Fig. 9a: bis c eine unbelastete, gebremste Rolle mit Einzelrad und einer Bremsvorrichtung entsprechend der in Fig. 3 und 4 dargestellten Bremseinrichtung;
- Fig. 10a: bis c die Rolle gemäß Fig. 9 im belasteten, freilaufenden Zustand;
- Fig. 11a: bis c eine unbelastete, gebremste Rolle mit Einzelrad und einer Bremsvorrichtung entsprechend der in Fig. 5 und 6 dargestellten Bremseinrichtung;
- Fig. 12a: bis c die Rolle gemäß Fig. 11 im belasteten, freilaufenden Zustand.

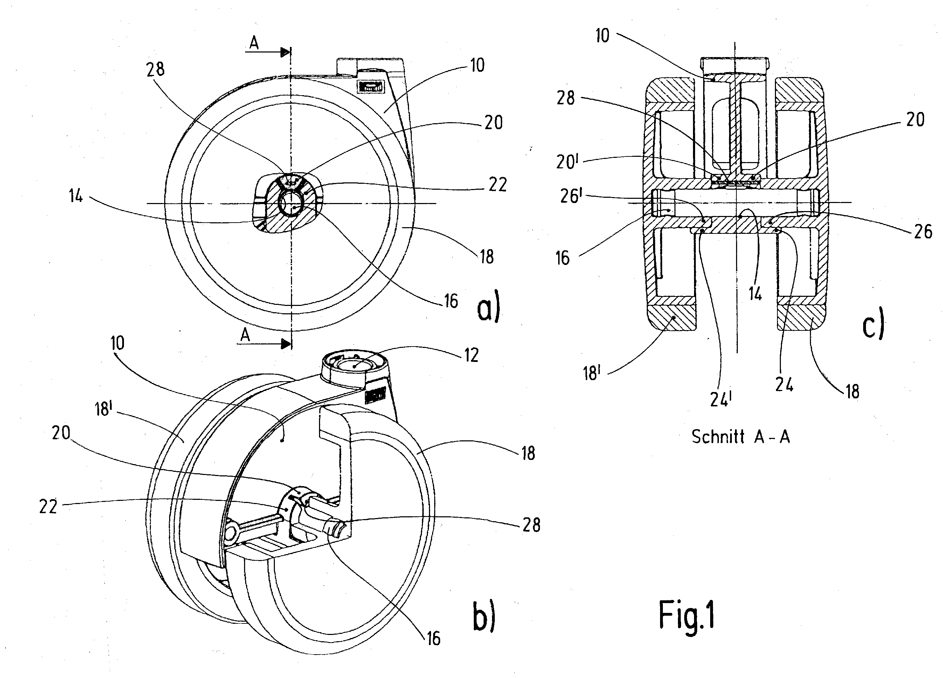

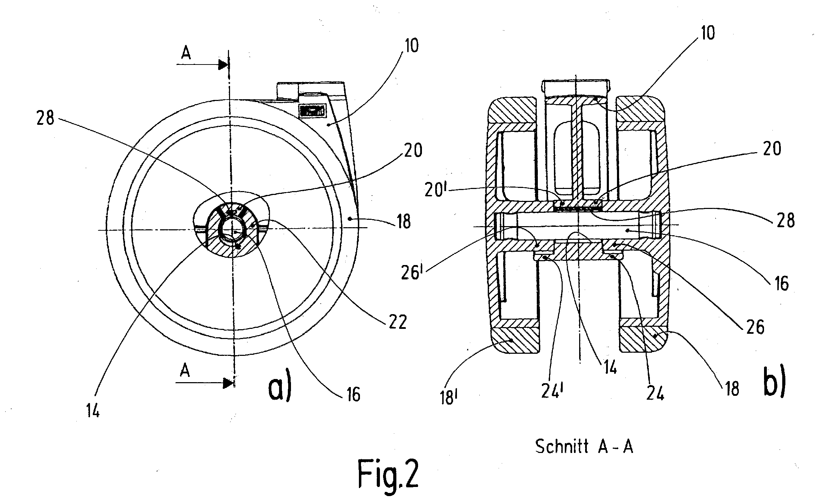

Die in Fig. 1 und 2 dargestellte Rolle ist als Doppelrolle ausgebildet und umfasst ein Gehäuse 10 mit einer oberseitigen, im Wesentlichen vertikalen Zapfenöffnung 12 zur Aufnahme eines Drehzapfens zur Verbindung der Rolle mit einem Möbelstück, eine im Wesentlichen horizontal ausgerichtete Gehäuseöffnung 14 zur Aufnahme eines Achsbolzens 16 und zwei jeweils auf ein Ende des Achsbolzens 16 aufgesteckte Räder 18, 18'. Die Gehäuseöffnung 14 ist als Langloch ausgebildet, derart dass der Achsbolzen 16 begrenzt vertikal verschiebbar in der Gehäuseöffnung 14 aufgenommen ist, im Übrigen jedoch kein merkliches Spiel aufweist, so dass der Achsbolzen 16 wackelfrei in der Gehäuseöffnung 14 sitzt.

Die Rolle weist eine Bremsvorrichtung auf, die im unbelasteten Zustand der Rolle eine Bremswirkung auf die Räder 18, 18' ausübt (Fig. 1) und im belasteten Zustand die Räder 18, 18' freigibt (Fig. 2).

Die Bremsvorrichtung umfasst federelastische Gehäusepartien 20, 20', die durch Schlitze in einem die den Achsbolzen 16 aufnehmenden Gehäuseöffnung 14 umschließenden Wulstrand 22 des Gehäuses 10 gebildet sind und die von oben eine Federkraft auf den Achsbolzen 16 ausüben. Aufgrund der Langlochausbildung der Gehäuseöffnung 14 wird der Achsbolzen 16 im unbelasteten Zustand der Rolle an den unteren Rand der Gehäuseöffnung 14 gedrückt. Dies bewirkt gleichzeitig, dass seitliche Vorsprünge 24, 24' von Radnaben 26, 26' der Räder 18, 18' beaufschlagt werden und einen Reibschluss erzeugen, der die Rolle bremst. Da die Gehäusepartien 20, 20' aus dem vergleichsweise weichen Kunststoffmaterial des Gehäuses 10 bestehen, können sie nur eine begrenzte Bremskraft erzeugen und sie sind mechanisch nur begrenzt belastbar. Aus diesem Grund weist die Bremsvorrichtung weiterhin ein Federelement 28 auf, das bei der Gehäuseherstellung als Einlegeteil vom Material der federelastischen Gehäusepartien 20, 20' umspritzt wird und die federelastischen Gehäusepartien 20, 20' sowohl hinsichtlich der erzeugten Bremskraft als auch hinsichtlich der mechanischen Belastbarkeit verstärkt. Das Federelement besteht aus einem geeigneten Material wie beispielsweise Federstahl, Kohlenstofffasermaterial oder glasfaserverstärktem Kunststoff.

Fig. 2 zeigt Ansichten der Rolle entsprechend Fig. 1a und c, jedoch im belasteten Zustand, d.h. beispielsweise wenn eine Person auf einem mit den Rollen bestückten Bürostuhl sitzt. Die auf dem Boden aufliegenden Räder 18, 18' erfahren eine der Gewichtsbelastung entsprechende Gegenkraft, die die Räder 18, 18' und damit den Achsbolzen 16 nach oben drängt. Dies geschieht entgegen der Federkraft der Kombination aus den federelastischen Gehäusepartien 20, 20' und dem Federelement 28, die hierdurch elastisch nach oben verformt werden, bis der Achsbolzen 16 am oberen Rand der Gehäuseöffnung 14 anschlägt. Gleichzeitig werden die Radnaben 26, 26' von den Vorsprüngen 24, 24' abgehoben und die Bremskraft auf die Räder 18, 18' damit aufgehoben. Die Räder 18, 18' können nun frei rollen.

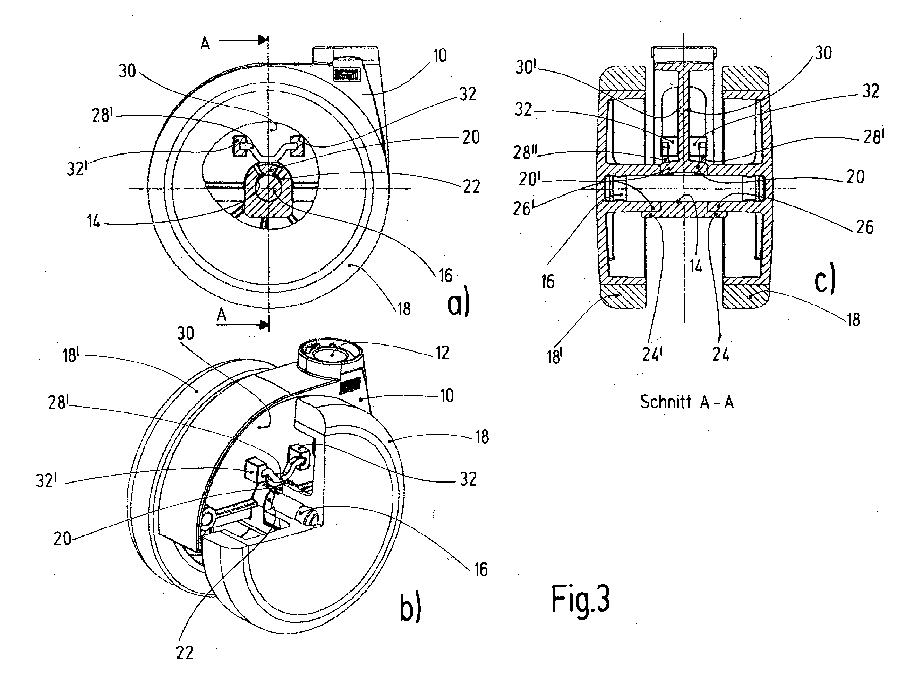

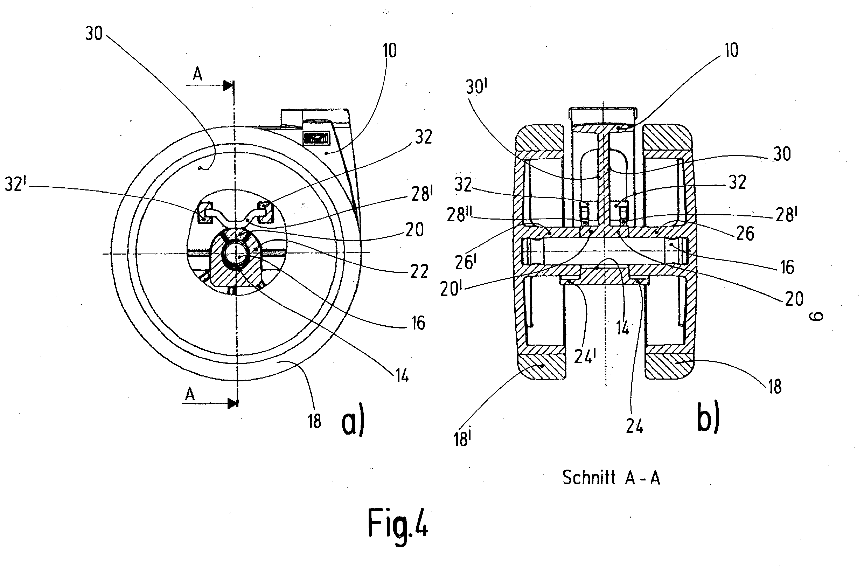

Fig. 3 und Fig. 4 zeigen eine zweite Ausführungsform der Bremsvorrichtung im unbelasteten, gebremsten Zustand (Fig. 3) und im belasteten, freilaufenden Zustand (Fig. 4), die sich hinsichtlich der Ausbildung und Anordnung des Federelements 28', 28" von der Ausführungsform der Fig. 1 und Fig. 2 unterscheidet, im Übrigen jedoch mit der Ausführungsform der Fig. 1 und Fig. 2 übereinstimmt, so dass die gleichen Bezugszeichen für übereinstimmende Teile verwendet werden und diesbezüglich im Einzelnen auf die obige Beschreibung, insbesondere auch hinsichtlich der Funktionsweise der Bremsvorrichtung, verwiesen werden kann.

Das Federelement ist hier nicht in die federelastischen Gehäusepartien 20, 20' eingebettet, sondern es sind zwei Federelemente 28', 28" vorgesehen, die jeweils an der Gehäuseseitenwand 30, 30' oberhalb der federelastischen Gehäusepartien angeordnet sind und diese letzteren unter Erzeugung einer Federkraft zwischen sich und dem Achsbolzen 16 einklemmen. Die Federelemente 28', 28" sind etwa jochförmig geformt und wirken mit einer zentralen Partie auf die federelastischen Gehäusepartien 20, 20' ein. Die freien Enden der Federelemente 28', 28" sind in an die Gehäuseseitenwände 30, 30' angeformete Vorsprüngen 32, 32' festgelegt. Die Federelemente 28', 28" bestehen wie das Federelement 28 (Fig. 1 und Fig. 2) aus einem geeigneten Material wie beispielsweise Federstahl, Kohlenstofffasermaterial oder glasfaserverstärkter Kunststoff.

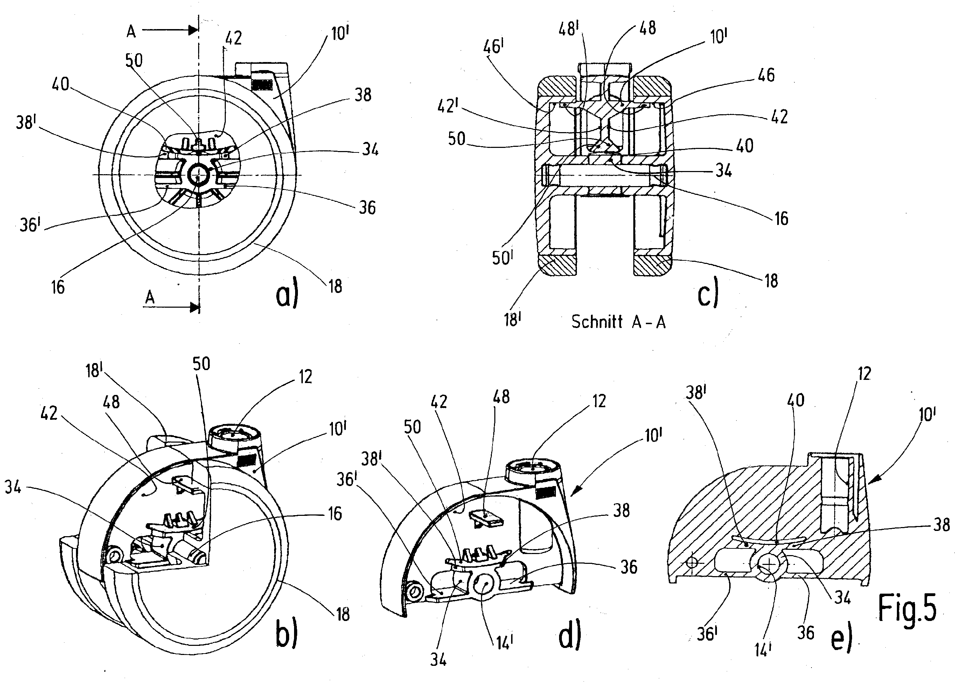

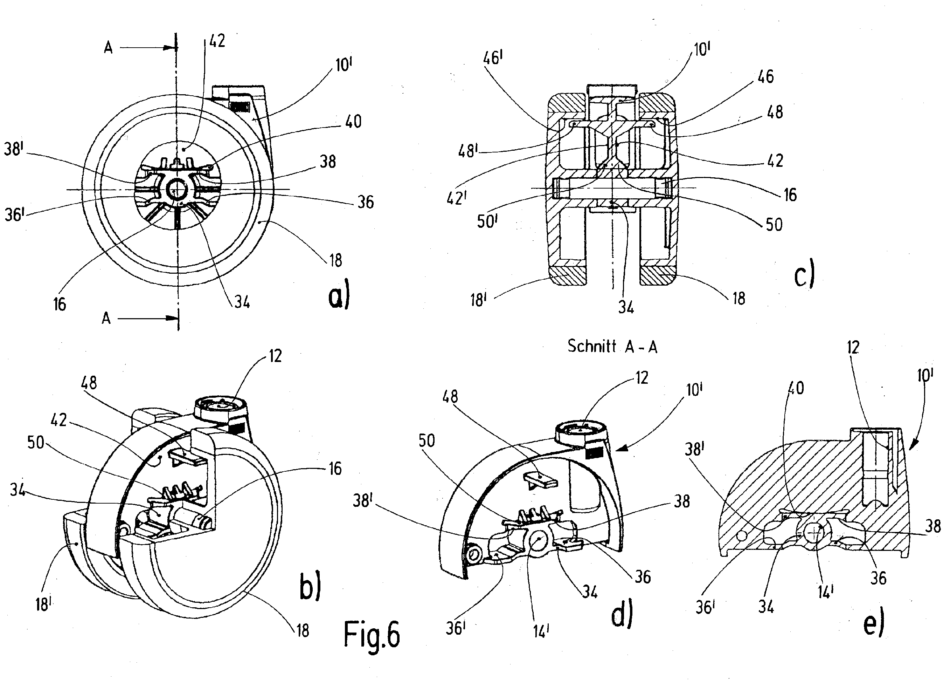

Fig. 5 und Fig. 6 zeigen eine alternative, nicht erfindungsgemäße Konfiguration einer Rolle mit Bremsvorrichtung im unbelasteten, gebremsten Zustand (Fig. 5) und im belasteten, freilaufenden Zustand (Fig. 6), die eine anders gestaltete federelastische Gehäusepartie aufweist und dadurch grundsätzlich ohne ein zusätzliches Federelement auskommt, obwohl ein solches auch hier vorgesehen werden kann, falls dies umständehalber erforderlich sein sollte. Die dargestellte Rolle ist wiederum als Doppelrolle ausgebildet, aber das Funktionsprinzip dieser Bremsvorrichtung ist auch auf Einradrollen anwendbar.

Die Rolle der Fig. 5 und Fig. 6 umfasst ein Gehäuse 10' mit einer im Wesentlichen horizontal ausgerichteten Gehäuseöffnung 14' zur Aufnahme des Achsbolzens 16, an dessen Endbereichen die Räder 18, 18' angeordnet sind, sowie die oberseitig offene Zapfenöffnung 12. Da der Achsbolzen 16 bei dieser Konfiguration nicht innerhalb der Gehäuseöffnung 14' zwischen den zwei Betriebszuständen verschoben wird, ist die Gehäuseöffnung 14' kreisrund ausgebildet.

Die Gehäuseöffnung 14' ist in einer Gehäusepartie 34 vorgesehen, die über Stege 36, 36', 38, 38' federelastisch mit dem übrigen Gehäuse 10' verbunden ist. Zwischen der Oberseite der Gehäusepartie 34 und dem Gehäuse 10' ist ein schmaler Spalt 40 gebildet, der den Federweg der Bremsvorrichtung definiert. Weiterhin sind über die Seitenwände 42, 42' des Gehäuses 10' überstehende Vorsprünge 48, 48' vorgesehen, die Bremsbacken der Bremsvorrichtung darstellen.

Die Stege 36, 36', 38, 38' verbinden die Gehäusepartie 34 mit dem Gehäuse 10' derart, dass sich die Gehäusepartie 34 in dem in Fig. 5 dargestellten, unbelasteten Zustand der Rolle in einer unteren Stellung befindet. Radiale Innenflanken 46, 46' der Räder 18, 18' werden in dieser Stellung gegen die an einen oberen Bereich der Seitenwände 42, 42' anschließenden Vorsprünge 48, 48' gezogen, so dass die Räder 18, 18' der Rolle gebremst werden. Wird die Rolle gewichtsbelastet, so tritt die in Fig. 6 dargestellte Stellung der Gehäusepartie 34 ein. Die Gehäusepartie 34 wird entgegen der Federkraft der Stege 36, 36', 38, 38' nach oben gedrückt, bis der Spalt 40 geschlossen ist und die Gehäusepartie 34 an der entsprechenden Gegenpartie des Gehäuses 10' anschlägt. Da das Gehäuse 10' im betreffenden Bereich vergleichsweise dünnwandig ausgebildet ist, sind an die Oberkante des Spalts 40 anschließende Anschlagvorsprünge 50, 50' vorgesehen, die die gehäuseseitige Anschlagfläche für die Gehäusepartie 34 vergrößern und damit eine höhere Kraftaufnahme ermöglichen. Gleichzeitig werden zusammen mit der Gehäusepartie 34 die auf dem Achsbolzen 16 angeordneten Räder 18, 18' nach oben verschoben und somit von den Bremsflächen der Vorsprünge 48, 48' abgehoben, wodurch die Rolle in den ungebremsten, freilaufenden Betriebszustand versetzt wird.

In dem Spalt 40 kann zusätzlich ein elastischer Formkörper angeordnet sein, um den Kraftaufwand für die Verschiebung der Gehäusepartie 34 einzustellen. Weiterhin ist die Verbindung der Gehäusepartie 34 mit dem Gehäuse 10' mittels der Stege 36, 36', 38, 38' nur eine mögliche Ausführungsform einer federelastischen Verbindung, an Stelle der Stege könnte die Gehäusepartie 34 beispielsweise auch in eine vertikal elastisch verformbare Wabenstruktur eingebettet sein.

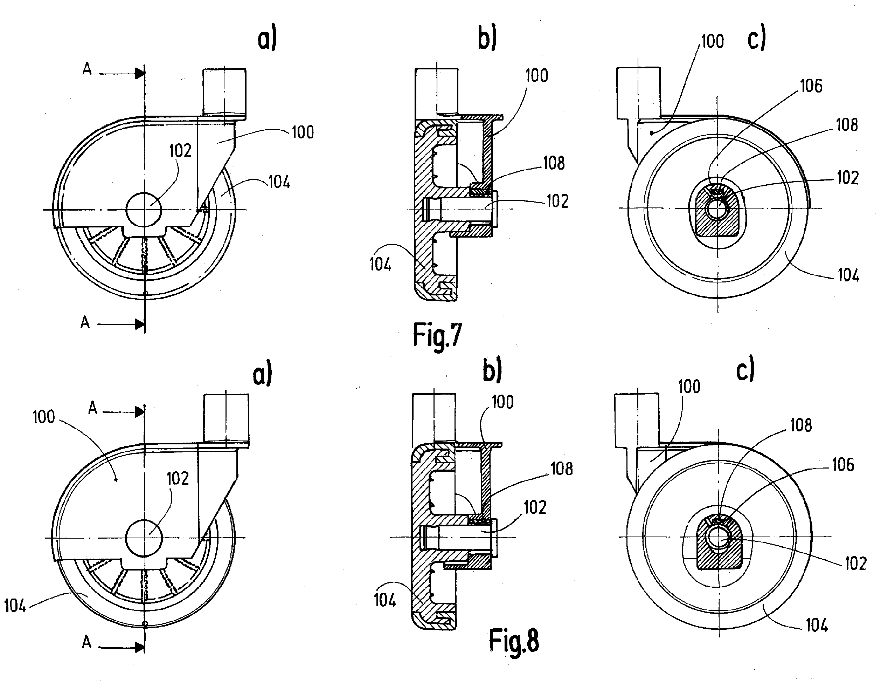

Die Fig. 7 bis 12 zeigen drei Konfigurationen einer Rolle jeweils im gebremsten und im ungebremsten Zustand mit einem einzelnen Rad und einer Bremsvorrichtung, die den Varianten der Konfigurationen gemäß den Fig. 1 bis 6 entspricht.

Die Rollen gemäß Fig. 7 bis 12 weisen jeweils ein einseitig angeordnetes Gehäuse 100, 100', 100" mit einer darin angeordneten Achse 102 zur drehbaren Lagerung des Rads 104 auf.

Die Bremsvorrichtung gemäß den Fig. 7 (gebremster Zustand) und 8 (freilaufender Zustand) entspricht der in den Fig. 1 und 2 dargestellten Bremsvorrichtung, so dass zu wesentlichen Merkmalen auch auf deren Beschreibung verwiesen werden kann. Das Gehäuse 100 weist oberhalb der Achse 102 zwei Einschnitte auf, die eine federelastische Auslenkung einer zwischen den Einschnitten befindlichen, fallweise bremsend auf die Achse 102 einwirkenden Federpartie 106 entsprechend des jeweiligen Belastungszustands erlaubt. Zur Verstärkung der Federpartie 106 ist in diese ein Federelement 108 eingebracht, das aus einem hochbelastbaren Material, beispielsweise einem Federstahl, besteht.

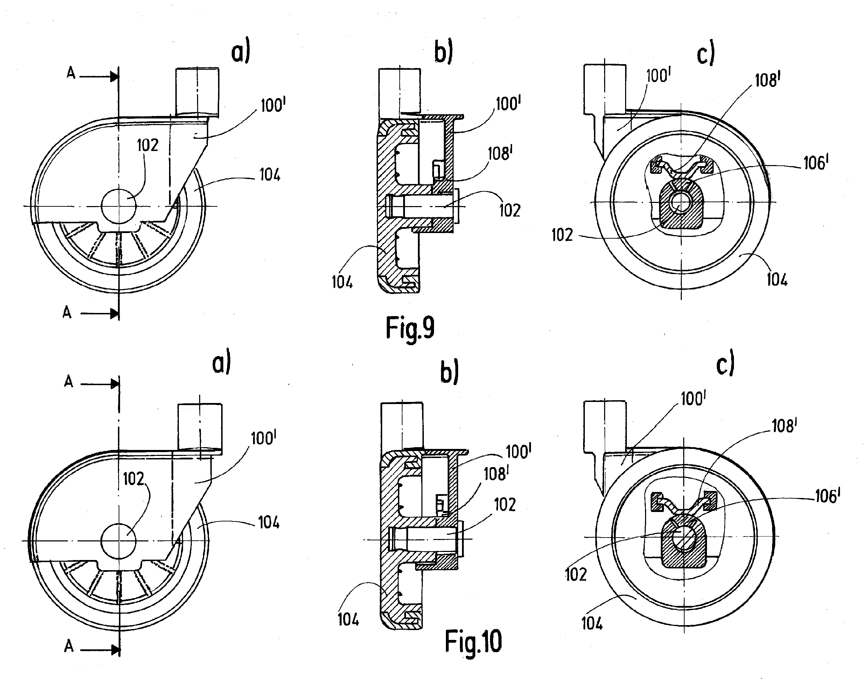

Die Bremsvorrichtung gemäß den Fig. 9 (gebremster Zustand) und 10 (freilaufender Zustand) entspricht der in den Fig. 3 und 4 dargestellten Bremsvorrichtung, so dass zu wesentlichen Merkmalen auch auf deren Beschreibung verwiesen werden kann. Die Federpartie 106' des Gehäuses 100' dieser Rolle weist kein internes Federelement zur Verstärkung auf, sondern ein oberhalb der Federpartie 106' angeordnetes Federelement 108', das aus einem hochbelastbaren Material, beispielsweise einem Federstahl, besteht.

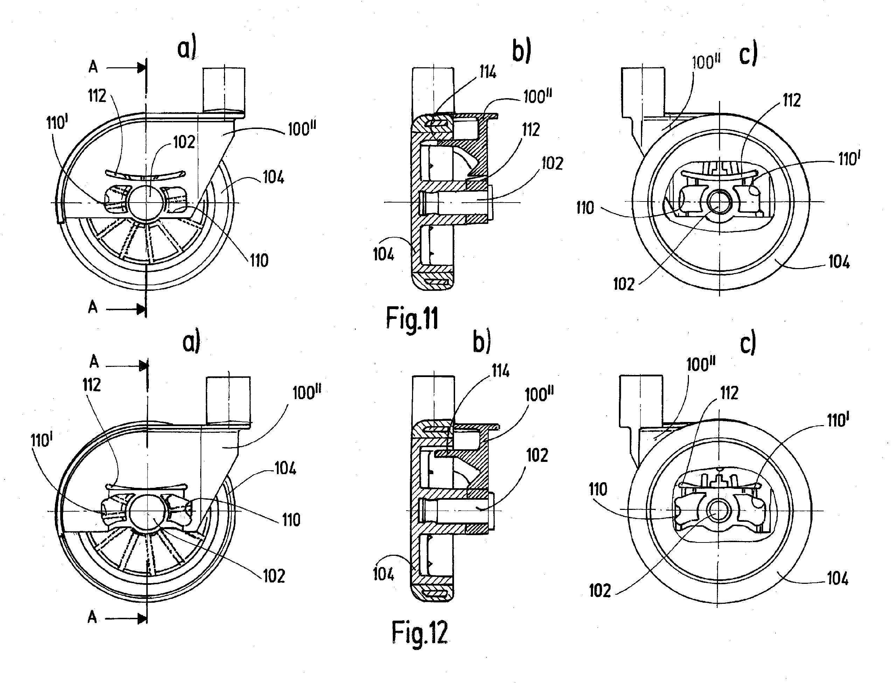

Die Bremsvorrichtung gemäß den Fig. 11 (gebremster Zustand) und 12 (freilaufender Zustand) entspricht der in den Fig. 5 und 6 dargestellten Bremsvorrichtung, so dass zu wesentlichen Merkmalen auch auf deren Beschreibung verwiesen werden kann. Das Gehäuse 100" dieser Rolle weist Ausnehmungen 110, 110' und 112 auf, die bei Belastung der Rolle eine elastische Verformung der die Achse 102 aufnehmenden Partie des Gehäuses 100" erlaubt, wodurch ein Bremselement 114 innenseitig auf den Außenbereich des Rads 104 einwirkt.

## Patentansprüche

1. Rolle, mit einem Gehäuse (10) und einem in einer im Wesentlichen horizontal ausgerichteten Gehäuseöffnung (14, 14') angeordneten Achsbolzen (16), an dem mindestens ein Rad (18, 18') angeordnet ist, mit einer im Wesentlichen vertikal ausgerichteten, oberseitigen Zapfenöffnung (12) zur Aufnahme eines Drehzapfens, und mit einer Bremsvorrichtung, die das mindestens eine Rad (18, 18') in einem ersten Belastungszustand bremst und in einem zweiten Belastungszustand freigibt, wobei die Gehäuseöffnung (14, 14') für den Achsbolzen (16) eine begrenzte, vertikale Verschiebbarkeit des Achsbolzens (16) erlaubt und die Bremsvorrichtung mindestens eine federelastische Gehäusepartie (20, 20') umfasst, die auf den Achsbolzen (16) einwirkt, **dadurch gekennzeichnet, dass** die Bremsvorrichtung weiterhin mindestens ein Federelement (28, 28', 28") aufweist, das mit der mindestens einen federelastischen Gehäusepartie (20, 20') zusammenwirkt und deren Bremskraftwirkung verstärkt und/oder die mechanische Belastbarkeit der mindestens einen federelastischen Gehäusepartie (20, 20') erhöht.

2. Rolle nach Anspruch 1, **dadurch gekennzeichnet, dass** das Gehäuse (10) oder zumindest die mindestens eine federelastische Gehäusepartie (20, 20') aus einem Kunststoff, insbesondere aus Polypropylen oder Polyamid besteht.

3. Rolle nach Anspruch 1 oder 2, **dadurch gekennzeichnet, dass** das mindestens eine Federelement (28, 28', 28") aus Metall, aus einem faserverstärkten Kunststoff oder einem anderen Werkstoff mit einer höheren mechanischen Belastbarkeit als die der mindestens einen federelastischen Gehäusepartie (20, 20') besteht.

4. Rolle nach Anspruch 2 oder 3, **dadurch gekennzeichnet, dass** das mindestens eine Federelement (28) als Blattfeder ausgebildet ist, die in das Material der mindestens einen federelastischen Gehäusepartie (20, 20') eingebettet ist.

5. Rolle nach einem der Ansprüche 1 bis 4, **dadurch gekennzeichnet, dass** das Gehäuse (10) mindestens eine seitlich über die Gehäuseöffnung (14) für den Achsbolzen (16) überstehende Wandpartie (24, 24') aufweist, an der eine Nabe (26, 26') des mindestens einen Rads (18, 18') in dem ersten, bremsenden Belastungszustand der Rolle reib- und/oder formschlüssig anliegt.

6. Rolle nach einem der Ansprüche 1 bis 5, **dadurch gekennzeichnet, dass** die mindestens eine federelastische Gehäusepartie (20, 20') durch mindestens zwei randoffene, die mindestens eine federelastische Gehäusepartie (20, 20') zwischen sich aufnehmende Schlitze in einem Wulstrand (22) der den Achsbolzen (16) aufnehmenden Gehäuseöffnung (14) geschaffen ist.

7. Rolle nach einem der Ansprüche 1 bis 6, **dadurch gekennzeichnet, dass** die Rolle als Doppelrolle mit zwei jeweils an einem Endbereich des Achsbolzens (16) angeordneten Rädern (18, 18') ausgebildet ist, wobei die Bremsvorrichtung zu jedem Rad (18, 18') hin weisende federelastische Gehäusepartien (20, 20') aufweist.

8. Rolle nach einem der Ansprüche 1 bis 7, **dadurch gekennzeichnet, dass** das mindestens eine Federelement (28) die mindestens eine federelastische Gehäusepartie (20, 20') in Richtung des mindestens einen Rades (18, 18') überragt.

9. Rolle nach einem der Ansprüche 1 bis 3 oder 5 bis 7, **dadurch gekennzeichnet, dass** das mindestens eine Federelement (28', 28") an einer Gehäuseseitenfläche (30, 30') auf die dem Achsbolzen (16) abgewandte Seite der mindestens einen federelastischen Gehäusepartie (20, 20') einwirkend angeordnet ist, derart dass die mindestens eine federelastische Gehäusepartie (20, 20') zwischen dem mindestens einen Federelement (28', 28") und dem Achsbolzen (16) eingeklemmt ist.

10. Rolle nach Anspruch 9, **dadurch gekennzeichnet, dass** an der Gehäuseseitenfläche (30, 30') Vorsprünge (32, 32') angeordnet sind, die Endbereiche des mindestens einen Federelements (28', 28") an der Gehäuseseitenfläche (30, 30') festlegen.

## Claims

1. Caster comprising a housing (10) and an axle bolt (16) which is arranged in a housing opening (14, 14') that is oriented substantially horizontally, on which axle bolt at least one wheel (18, 18') is arranged, comprising a substantially vertically oriented pin opening (12) on the upper side for receiving a pivot pin, and comprising a braking device which brakes the at least one wheel (18, 18') in a first load state and releases it in a second load state, the housing opening (14, 14') for the axle bolt (16) allowing a limited, vertical displacement of the axle bolt (16) and the braking device comprising at least one resilient housing part (20, 20') which acts on the axle bolt (16), **characterized in that** the braking device also has at least one spring element (28, 28', 28") which interacts with the at least one resilient housing part (20, 20') and accentuates the braking force effect thereof and/or increases the mechanical load of the at least one resilient housing part (20, 20').

2. Caster according to claim 1, **characterized in that** the housing (10) or at least the at least one resilient housing part (20, 20') consists of a plastics material, in particular of polypropylene or polyamide.

3. Caster according to either claim 1 or claim 2, **characterized in that** the at least one spring element (28, 28', 28") consists of metal, a fiber-reinforced plastics material or another material having a higher mechanical strength than that of the at least one resilient housing part (20, 20').

4. Caster according to either claim 2 or claim 3, **characterized in that** the at least one spring element (28) is designed as a leaf spring which is embedded in the material of the at least one resilient housing part (20, 20').

5. Caster according to any of claims 1 to 4, **characterized in that** the housing (10) has at least one wall part (24, 24') which projects laterally beyond the housing opening (14) for the axle bolt (16) and on which a hub (26, 26') of the at least one wheel (18, 18') frictionally and/or form-fittingly rests in the first, braking load state of the caster.

6. Caster according to any of claims 1 to 5, **characterized in that** the at least one resilient housing part (20, 20') is formed by at least two open-edged slots in a beaded edge (22) of the housing opening (14) which receives the axle bolt (16), said slots receiving the at least one resilient housing part (20, 20') therebetween.

7. Caster according to any of claims 1 to 6, **characterized in that** the caster is designed as a double caster having two wheels (18, 18') which are each arranged on an end region of the axle bolt (16), the braking device having resilient housing parts (20, 20') which point to each wheel (18, 18').

8. Caster according to any of claims 1 to 7, **characterized in that** the at least one spring element (28) protrudes beyond the at least one resilient housing part (20, 20') in the direction of the at least one wheel (18, 18').

9. Caster according to any of claims 1 to 3 or 5 to 7, **characterized in that** the at least one spring element (28', 28") is arranged on a housing lateral surface (30, 30') on the side of the at least one resilient housing part (20, 20') which faces away from the axle bolt (16) such that the at least one resilient housing part (20, 20') is clamped between the at least one spring element (28', 28") and the axle bolt (16).

10. Caster according to claim 9, **characterized in that** projections (32, 32') are arranged on the housing lateral surface (30, 30'), which projections determine the end regions of the at least one spring element (28', 28") on the housing lateral surface (30, 30').

## Revendications

1. Rouleau, comportant un boîtier (10) et un boulon d'axe (16) disposé dans une ouverture de boîtier (14, 14') orientée sensiblement horizontalement et sur lequel au moins une roue (18, 18') est disposée, comportant une ouverture à pivot (12) supérieure orientée sensiblement verticalement pour recevoir un pivot, et comportant un dispositif de freinage, lequel freine l'au moins une roue (18, 18') dans un premier état de contrainte et la libère dans un second état de contrainte, dans lequel l'ouverture de boîtier (14, 14'), pour le boulon d'axe (16), permet un débattement vertical limité du boulon d'axe (16) et le dispositif de freinage comprend au moins une partie de boîtier (20, 20') élastique à ressort, lequel agit sur le boulon d'axe (16), **caractérisé en ce que** le dispositif de freinage comporte en outre au moins un élément de ressort (28, 28', 28"), lequel coopère avec l'au moins une partie de boîtier (20, 20') élastique à ressort et lequel renforce son effet de force de freinage et/ou lequel augmente la capacité de charge mécanique de l'au moins une partie de boîtier (20, 20') élastique à ressort.

2. Rouleau selon la revendication 1, **caractérisé en ce que** le boîtier (10) ou au moins l'au moins une partie de boîtier (20, 20') élastique à ressort est en matière plastique, en particulier en polypropylène ou en polyamide.

3. Rouleau selon la revendication 1 ou 2, **caractérisé en ce que** l'au moins un élément de ressort (28, 28', 28") est en métal, en matière plastique renforcée par des fibres ou en un autre matériau présentant une capacité de charge mécanique supérieure à celle de l'au moins une partie de boîtier (20, 20') élastique à ressort.

4. Rouleau selon la revendication 2 ou 3, **caractérisé en ce que** l'au moins un élément de ressort (28) est conçu sous la forme d'un ressort à lames, lequel est incorporé dans le matériau de l'au moins une partie de boîtier (20, 20') élastique à ressort.

5. Rouleau selon l'une quelconque des revendications 1 à 4, **caractérisé en ce que** le boîtier (10) comporte au moins une partie de paroi (24, 24') faisant saillie latéralement depuis l'ouverture de boîtier (14) pour le boulon d'axe (16) et sur laquelle un moyeu (26, 26') de l'au moins une roue (18, 18') repose par liaison de friction et/ou par liaison de complémentarité de force dans le premier état de contrainte de freinage du rouleau.

6. Rouleau selon l'une quelconque des revendications 1 à 5, **caractérisé en ce que** l'au moins une partie de boîtier (20, 20') élastique à ressort est créée par au moins deux fentes à bord ouvert, lesquelles reçoivent l'au moins une partie de boîtier (20, 20') élastique à ressort entre elles dans un bord boudiné (22) de l'ouverture de boîtier (14) recevant le boulon d'axe (16).

7. Rouleau selon l'une quelconque des revendications 1 à 6, **caractérisé en ce que** le rouleau est conçu sous la forme d'un rouleau double comportant deux roues (18, 18') respectivement disposées sur une zone d'extrémité du boulon d'axe (16), dans lequel le dispositif de freinage comporte des parties de boîtier (20, 20') élastiques à ressort tournées vers chaque roue (18, 18').

8. Rouleau selon l'une quelconque des revendications 1 à 7, **caractérisé en ce que** l'au moins un élément de ressort (28) fait saillie depuis l'au moins une partie de boîtier (20, 20') élastique à ressort dans la direction de l'au moins une roue (18, 18').

9. Rouleau selon l'une quelconque des revendications 1 à 3 ou 5 à 7, **caractérisé en ce que** l'au moins un élément de ressort (28', 28") est disposé sur une surface latérale de boîtier (30, 30') de manière à agir sur le côté opposé au boulon d'axe (16) de l'au moins une partie de boîtier (20, 20') élastique à ressort, de telle sorte que l'au moins une partie de boîtier (20, 20') élastique à ressort est serrée entre l'au moins un élément de ressort (28', 28") et le boulon d'axe (16).

10. Rouleau selon la revendication 9, **caractérisé en ce que** des saillies (32, 32') sont disposées sur la surface latérale de boîtier (30, 30'), les zones d'extrémité de l'au moins un élément de ressort (28', 28") étant fixées sur la surface latérale de boîtier (30, 30').
